# EUROPÄISCHE PATENTSCHRIFT

(11) **EP 1 291 254 B1**
(45) Veröffentlichungstag und Bekanntmachung des Hinweises auf die Patenterteilung: **21.03.2007**
(21) Anmeldenummer: 02012758.5
(22) Anmeldetag: 08.06.2002
(51) Int. Cl.: B60S 1/04

(54) **Scheibenwischeranlage**
Windscreen wiper device
Dispositif d'essuie-glace

(30) Priorität: 06.09.2001 DE 10143610
(43) Veröffentlichungstag der Anmeldung: 12.03.2003
(60) Teilanmeldung: 06007951.4
(73) Patentinhaber: ROBERT BOSCH GMBH, 70442 Stuttgart (DE)
(72) Erfinder: Muehlpforte, Kurt, 77815 Buehl (DE); Dietrich, Jan, Dr., 77815 Buehl (DE); Kalchschmidt, Peter, 76646 Bruchsal- Untergrombach (DE); Fleischer, Claus, 77815 Buehl (DE); Boos, Tino, 76532 Baden-Baden (DE)

(56) Entgegenhaltungen:
- EP-A- 0 689 975
- EP-A- 1 125 805
- DE-A- 19 833 089
- DE-A- 19 860 264
- DE-U- 8 803 714
- FR-A- 2 770 880
- GB-A- 2 228 188
- US-A- 5 593 125
- US-B1- 6 168 223

## Beschreibung

### Stand der Technik

Die Erfindung geht von einer Scheibenwischeranlage nach dem Oberbegriff des Anspruchs 1 aus.

Wischeranlagen für Kraftfahrzeuge werden mit einem Wischerträger, einer so genannten Platine bzw. Rohrplatine - wenn der Wischerträger Elemente aus Rohren enthält -, an der Fahrzeugkarosserie eines Kraftfahrzeugs befestigt. Die Platine umfasst eine Motorplatine, die einen Wischerantrieb mit einem Wischermotor und einem daran angebauten Getriebe trägt.

Antriebswellen der Scheibenwischer sind in Wischerlagern gelagert, deren Lagergehäuse an den Enden der Platine befestigt oder angeformt sind. Die Platine ist unmittelbar über die Lagergehäuse oder über Befestigungsaugen, die am Lagergehäuse, an der Platine und/oder der Motorplatine angeformt sind, durch Schrauben an einer Fahrzeugkarosserie befestigt. In der Regel werden die Platinen aus vielen Bauteilen zusammengesetzt. Dies führt zu zahlreichen Schnittstellen mit entsprechenden Toleranzen. Ferner ist die Befestigung mittels Schrauben aufwendig und die Montagekosten sind hoch.

Aus der DE 198 29 320 A1 ist eine solche Rohrplatine bekannt, die über vier Befestigungsaugen mit der Fahrzeugkarosserie verschraubt wird.

In einigen Fällen sind die Wischerlager direkt an der Fahrzeugkarosserie befestigt. Ein derartiges, an einer Stirnwand befestigtes Wischerlager ist aus der DE 199 25 291 A1 bekannt. Das Lagergehäuse des Wischerlagers weist dazu drei Abstützbereiche auf, und zwar einen ersten, der eine Längsachse des Lagergehäuses umfasst. Ein zweiter und dritter Abstützbereich sind relativ zum ersten axial versetzt zum anderen Ende vorgesehen und ungefähr diametral zur Längsachse des Lagergehäuses zueinander angeordnet. Der erste Abstützbereich wird durch einen Flansch gebildet, während der zweite und dritte als Steckfüße ausgebildet sind, die in Taschen an der Stirnwand eingreifen. Die Lage des Wischerlagers wird durch eine Schraubenmutter fixiert, die auf ein angegossenes Gewinde am Lagergehäuse geschraubt wird und einen Flansch des Lagergehäuses gegen einen Haltewinkel presst. Auch bei dieser Befestigungsvariante ist die Montage recht aufwendig, zumal die Wischerlager einzeln befestigt werden.

Aus der GB-A-2228188 ist eine Befestigungsanordnung einer Scheibenwischeranlage bekannt, die mittels einer Platine an mehreren Stellen an einer Fahrzeugkarosserie befestigt ist. Die Platine besitzt an ihren Befestigungsarmen gabelförmige Enden mit einer isolierten Durchführung. Die äußere Umfangsfläche der isolierten Durchführung besitzt eine Aussparung, die in das kabelförmige Ende passt, sodass die isolierte Durchführung vollständig in das gabelförmige Ende montiert werden kann. Die isolierte Durchführung besitzt an der offenen Seite des kabelförmigen Endes einen Schlitz, dessen Weite etwas kleiner ist als der äußere Durchmesser eines entsprechenden Bolzens, der mit einem Ende an der Fahrzeugkarosserie befestigt ist. Der Bolzen kann einfach in die Aufnahmebohrung eingefügt werden, in dem er seitlich in den Schlitz der Befestigungsarme gedrückt wird und dabei die isolierte Durchführung elastisch verformt, bis er in den Aufnahmesitz einschnappt. Auf Grund der Gestaltung kann die Stabilität in allen Richtungen gewährleistet werden, nämlich vertikal, in Längsrichtung und seitlich mit Ausnahme in Richtung des freien Endes des Bolzens und in Richtung des Schlitzes.

Aus der der US-B-6 168 223 ist eine Wischeranlage bekannt, die eine Rohrplatine besitzt. Diese ist im Bereich der Wischerlager und im Bereich des Antriebsaggregats über Steckverbindungen mit der Karosserie verbunden. Dabei kann die Steckverbindung im Bereich des Antriebselements ein Schnappelement aufweisen. Hierbei besitzt ein Befestigungselement, das mit der Motorplatine verbunden ist, einen Kopf, der durch eine Öffnung eines Gummielements gedrückt werden kann, das in einem Karosserieteil gehalten ist. Im montierten Zustand liegt der Kopf mit einer Schulter axial an einer Stirnfläche des Gummielements an und sichert die Platine entgegengesetzt zur Montagerichtung.

Aus der DE-A-8803714U ist eine lösbare Verbindung mit einem Zapfen mit einem Kreiszylinderprofil und einem hülsenähnlichen Aufnahmeteil bekannt. Dieses ist mit einer an das Kreiszylinderprofil angepassten Aufnahmeöffnung für den Zapfen versehen. Der Zapfen weist zwei das Kreiszylinderprofil unterbrechende, diametral gegenüberliegende, parallel verlaufende Abflachungen auf, während das Aufnahmeteil mit einer an der Aufnahmeöffnung angrenzenden Durchgangsöffnung versehen ist, deren Lichtweite zum radialen Durchstecken des Zapfens dem Abstand der beiden Abflachungen entspricht. Durch Drehen des Aufnahmeteils und des Zapfens relativ zueinander wird der Zapfen im Aufnahmeteil verriegelt.

### Vorteile der Erfindung

Nach der Erfindung ist die Platine eine Rohrplatine und das Passteil wird von einem Stück eines Platinenrohrs gebildet. Das Passteil der Platine wird in den Aufnahmesitz gedrückt und von der Klammer gehalten. Eine derartige Montage der Platine ist einfach, da zusätzliche Bauteile, wie beispielsweise Schrauben oder Schraubenmuttern entfallen. Neben diesen Materialeinsparungen kann gleichzeitig auf die bei Schraubverbindungen relativ aufwendigen Befestigungselemente an der Platine und der Fahrzeugkarosserie verzichtet werden, wodurch der Fertigungsaufwand reduziert wird. Zudem entfallen Schraubvorgänge, sodass auch die Montagezeit verkürzt ist.

Am Platinenrohr werden die Klammern zweckmäßigerweise im Bereich der Wischerlager angeordnet, wobei viele Varianten möglich sind. Die Klammern benötigen relativ wenig Bauraum und zur Montage wenig Freiraum. Sie können das Platinenrohr in Richtung der Längsachse außerhalb oder innerhalb der wischerlager umgreifen, sodass unterschiedliche Platzverhältnisse auf einfache Weise berücksichtigt werden können. Liegen die Klammern zwischen den Wischerlagern, kann das Platinenrohr an den Lagergehäusen enden und es ergibt sich ein kurzes Platinenrohr und eine leichte Platine.

Zweckmäßigerweise können die Klammern das Platinenrohr auch auf den Umfang bezogen aus verschiedenen Richtungen umgreifen, wodurch sich weitere Montagevarianten ergeben. Um Fertigungskosten zu sparen, kann zudem durch eine gezielte Auswahl der Befestigungsstellen die Gestaltung des Platinenrohrs vereinheitlicht werden, sodass es in möglichst vielen Fahrzeugtypen eingesetzt werden kann. Außerdem werden durch die Schnappverbindung bestehende Toleranzen einer vormontierten Platine problemlos ausgeglichen, da diese im Vergleich zu Schraubverbindungen nicht so genau platziert sein muss. Insofern bestehen geringe Toleranzanforderungen an die einzelnen Bauteile, sodass weitere Fertigungskosten eingespart werden.

Vorzugsweise ist die Klammer am äußeren Umfang mit der Fahrzeugkarosserie verbunden, wodurch die Anzahl der Teile ebenfalls reduziert wird. Je nach den Platzverhältnissen kann die Klammer unmittelbar aus einem Teil des Karosserieblechs bestehen und angeformt sein oder an die Fahrzeugkarosserie geschweißt, genietet oder geklipst werden. In der Montage wird dann das Platinenrohr einfach in die Klammer gedrückt, wobei eventuelles geringfügiges Nachjustieren möglich ist.

Diese einfache Montage ist auch im Reparaturfall vorteilhaft, da zu ersetzende Bauteile schnell ausgetauscht werden können.

In einer Ausgestaltung der Erfindung ist an der Fahrzeugkarosserie eine Auflage angebracht, welche an ihrem freien Ende die Form einer Halbschale aufweist, in der das entsprechende Passteil der Platine eingelegt ist. Die Klammer ist lose und kann von Hand oder mithilfe einer Vorrichtung über die Halbschale und das Passteil, z.B. das Platinenrohr, gedrückt werden, wobei vorteilhafterweise unterschiedliche Fügerichtungen möglich sind. Zudem kann die vormontierte Platine in der Auflage ausgerichtet werden, bevor sie durch die Klammer endgültig fixiert wird.

Um eine schwingungsarme Verbindung zu erreichen, ist die Klammer oder das Passteil der Platine von einem elastischen Isolationsmaterial, vorzugsweise Gummi, umgeben. Das Entkopplungselement wird als Bauteil vormontiert. Alternativ ist das Element in den Aufnahmesitz der Klammer oder auf das Passteil der Platine gespritzt, wodurch die Anzahl der Teile verringert ist. Auch in diesem Fall verkürzt sich die Montagezeit und Fehlerquellen, wie beispielsweise falsch eingesetzte oder verkantete Bauteile, werden ausgeschlossen.

In der Regel besitzen der Aufnahmesitz der Klammer und das Passteil einen kreisförmigen Querschnitt, sodass die Platine um die Rohrachse gedreht und ausgerichtet werden kann. Es kann aber auch vorteilhaft sein, dass der Querschnitt eine von der Kreisform abweichende Kontur hat, z.B. eine elliptische oder polygonale. Dadurch wird zwischen der Klammer und dem Passteil in Umfangsrichtung ein Formschluss erzielt, sodass Drehmomente gut übertragen werden können.

Bei den bisher beschriebenen Varianten der Erfindung werden das Passteil und die Klammer unter Krafteinwirkung montiert. Soll das Fügen erleichtert werden, sieht eine weitere Ausgestaltung der Erfindung vor, dass der ringförmige Querschnitt des Passteils zwei gegenüberliegende Abflachungen mit einem Abstand zueinander aufweist, der kleiner ist als der Montageschlitz der Klammer. Das Passteil passt ohne oder mit geringer Krafteinwirkung mit der abgeflachten Querschnittseite durch den Montageschlitz und wird nach dem Fügen durch eine Drehbewegung um ca. 90° verriegelt. Dabei kann entweder das Passteil oder in einer Variante die lose Klammer gedreht werden. Außerdem kann durch eine geringfügig abgeflachte Form quer zum Montageschlitz bei der Drehbewegung mit geringen Kräften eine Pressung zwischen der Klammer und dem Passteil erreicht werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Darstellung einer Platine,
- Fig. 2: eine Variante zu Fig. 1,
- Fig. 3: einen Schnitt durch eine ortsfeste Klammer entsprechend der Linie III-III in Fig.1
- Fig. 4: eine Variante zu Fig. 3,
- Fig. 5: einen Schnitt durch eine Auflage an einer Fahrzeugkarosserie und eine lose Klammer,
- Fig. 6-7: eine Variante zu Fig. 4,
- Fig. 8: eine Variante zu Fig. 5 und
- Fig. 9: eine Ansicht in Pfeilrichtung IX in Fig. 8.

### Beschreibung der Ausführungsbeispiele

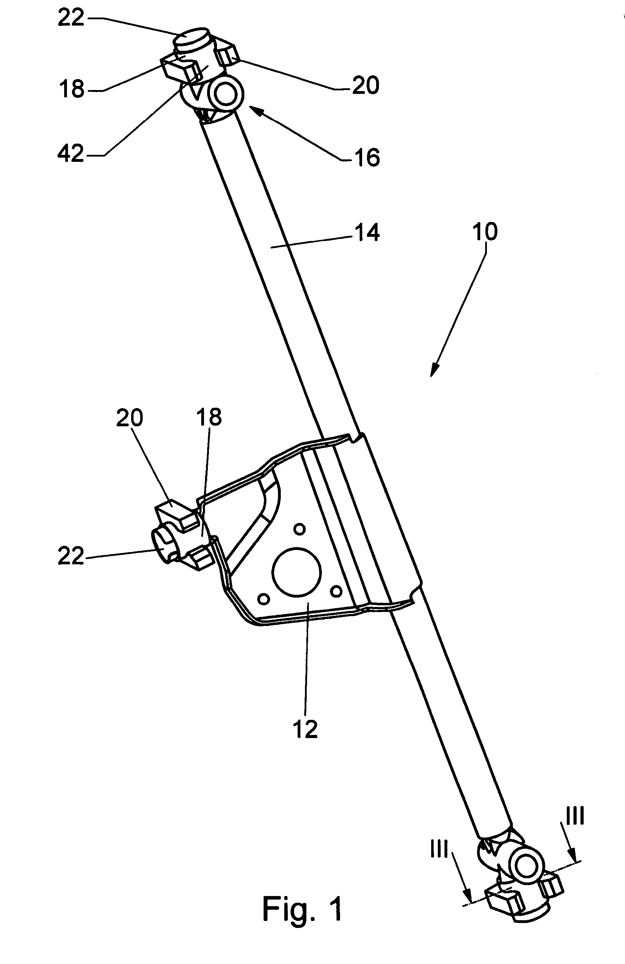

Eine als Rohrplatine ausgebildete Platine 10 umfasst ein Platinenrohr 14, an dem im mittleren Bereich eine als Motorplatine 12 dienende Platte angeordnet ist (Fig. 1). An den Enden des Platinenrohrs 14 ist jeweils ein Wischerlager 16 angeordnet, an das nach außen ein zylindrisches Passteil 22 angeformt ist. Am freien Ende der Motorplatine 12 ist ein weiteres Passteil 22 angeordnet. Die Passteile 22 im Bereich der Wischerlager 16 sind Bestandteil des Platinenrohrs 14. Sie sind mit Entkopplungselementen 18 umgeben, die die Übertragung von Schwingungen der Platine 10 auf eine nicht näher dargestellte Fahrzeugkarosserie verhindern oder dämpfen, an der die Platine 10 befestigt ist. Die Entkopplungselemente 18 sind aus einem gummielastischen Werkstoff. Sie können in die angrenzenden Bauteile eingesetzt oder auf diese aufgesteckt oder aufgespritzt werden.

Die drei Passteile 22 an den Befestigungsstellen werden jeweils durch einen Montageschlitz 42 eines Schnappelements in Form einer Klammer 20 gedrückt, die vorzugsweise aus einem elastisch nachgiebigen Werkstoff besteht, z.B. Kunststoff oder einer Federkonstruktion aus Metall, und im montierten Zustand das Passteil 22 umgreift, sodass das Passteil 22 an seinem Umfang unter Zwischenschalten des Entkopplungselements 18 in einem Aufnahmesitz 44 der Klammer 20 mit einer Vorspannung gehalten wird. Die Klammern 20 sind mit einem abgeflachten Teil 78 ihres Umfangs an der Fahrzeugkarosserie durch Schweißen, Nieten, Klipsen usw. befestigt, wobei der Montageschlitz 42 so ausgerichtet ist, dass das Passteil 22 der Platine 10 bei der Montage einfach in die Klammern 20 gedrückt werden kann. Sie können auch direkt aus dem Karosserieblech geformt werden, wodurch Material- und Montagekosten eingespart werden.

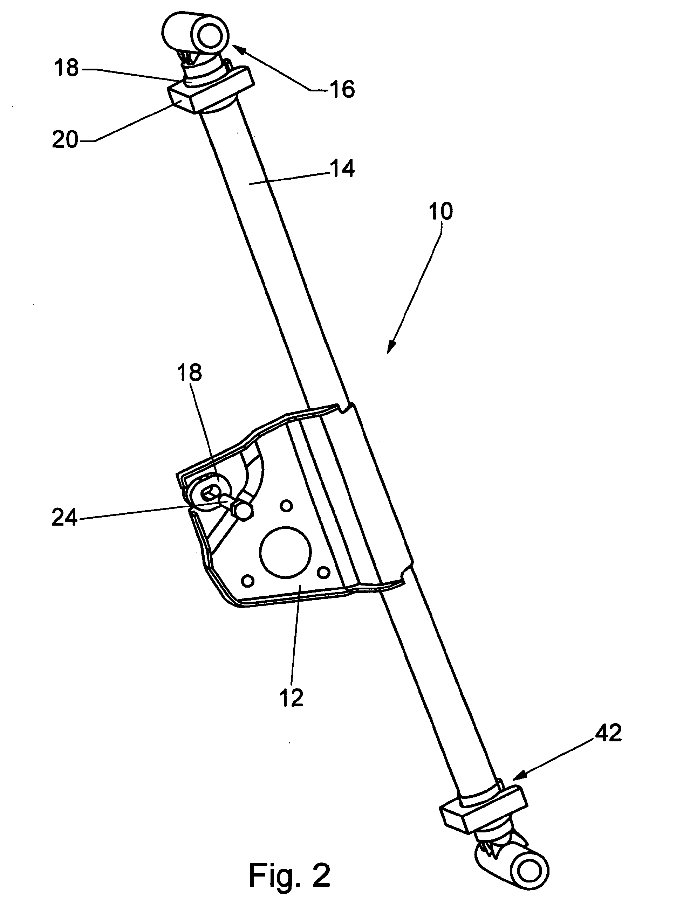

Es müssen nicht alle Befestigungsstellen als Schnappelement 20 ausgebildet sein. Fig. 2 zeigt eine Befestigung mittels einer Schraube 24 an der Motorplatine 12 und Klammern 20 im Bereich der Wischerlager 16. Die Befestigungsstelle an der Motorplatine 12 ist ein Fixpunkt, während an den Befestigungsstellen im Bereich der Wischerlager 16 das Platinenrohr 14 sich in Achsrichtung einstellen und um seine Längsachse geschwenkt werden kann. Außerdem kann die Position der Klammern 20 in Bezug auf die Wischerlager 16 variiert werden. Bei der Ausführung nach Fig. 1 sind die Passteile 22 und die Klammern 20 außen am Wischerlager 16 angeordnet, während bei der Ausführung nach Fig. 2 die Klammern 20 zwischen der Motorplatine 12 und den Wischerlagern 16 angeordnet sind, wobei außerdem der Montageschlitz 42 der Klammer 20 etwa parallel zur Motorplatine 12 verläuft. Durch diese Anordnung kann das Platinenrohr 14 verkürzt werden. Die Platine 10 wird kompakter und gleichzeitig wird weniger Material benötigt. Zur Montage wird das Platinenrohr 14 zuerst in die Klammern 20 gedrückt und anschließend wird die Motorplatine 12 unter Zwischenlage eines Entkopplungselements 18 mittels der Schraube 24 befestigt.

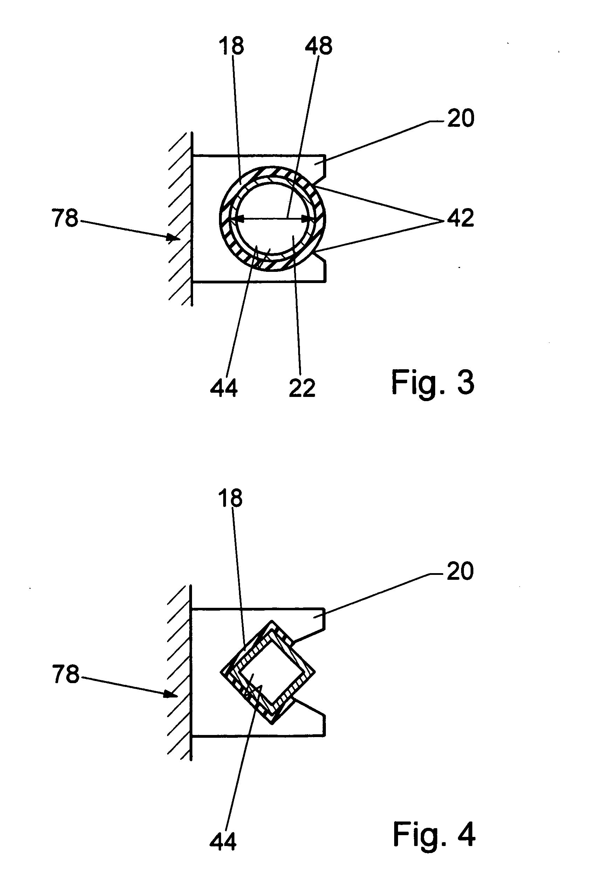

Der Schnitt nach Fig. 3 lässt erkennen, wie das Passteil 22 in einem annähernd ringförmigen Aufnahmesitz 44 der Klammer 20 unter Zwischenlage des Entkopplungselements 18 gelagert ist. Das Entkopplungselement 18 kann auf das Passteil 22 aufgesteckt oder aufgespritzt sein, und es wird zusammen mit dem Passteil 22 durch den Montageschlitz 42 gedrückt. Dabei ist der Durchmesser 48 des Passteils 22 so auf die Weite des Montageschlitzes abgestimmt, dass das Entkopplungselement 18 und die Klammer 20 elastisch nachgeben und das Passteil 22 schließlich in den Aufnahmesitz 44 einrastet. Bei dieser Ausführungsform besitzen das Passteil 22 und der Aufnahmesitz 44 einen kreisförmigen Querschnitt. Es sind allerdings auch von einer Kreisform abweichende Querschnittkonturen, wie z.B. elliptische oder polygonale Querschnitte, denkbar. Fig. 4 zeigt z.B. einen viereckigen Querschnitt, wie er sich ergeben kann, wenn das Platinenrohr 14 ein Vierkantrohr ist und als Passteil dient. Ferner ist bei der Ausführung nach Fig. 4 das Entkopplungselement auf dem Aufnahmesitz 44 der Klammer 20 aufgebracht.

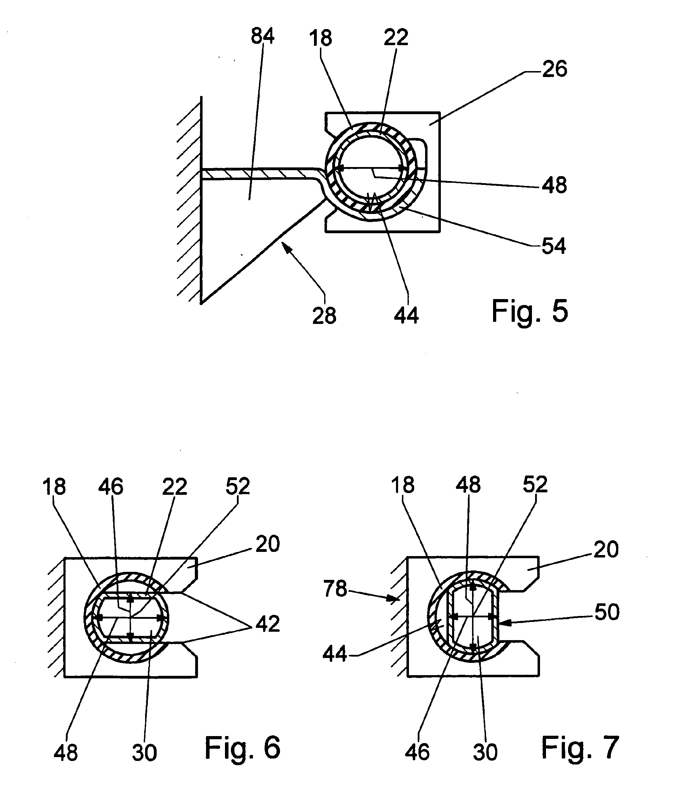

Bei der Ausführung nach Fig. 5 ist eine Auflage 28 an der Fahrzeugkarosserie befestigt. Sie weist am äußeren Ende eines Befestigungsteils 84 die Form einer Halbschale 54 auf, in der das ringförmige Passteil 22 gebettet ist. Zum Befestigen wird eine lose Klammer 26 über das Passteil 22 und die Halbschale 54 geklipst. Zwischen dem Aufnahmesitz 44 der Klammer 26 und der Halbschale 54 einerseits und dem Passteil 22 andererseits ist ein Entkopplungselement 18 vorgesehen, das zweckmäßigerweise mit dem Passteil 22 verbunden ist.

Bei einer weiteren Ausführung ist eine nahezu kraftlose Montage möglich. Das Passteil 30 weist in einem Abstand 46 zwei gegenüberliegende Abflachungen 50 auf (Fig. 6), wobei der Abstand 46 kleiner ist als die Weite des Montageschlitzes 42, sodass das Passteil 30 einer schmalen Querschnittseite ohne oder mit einem geringen Druck durch den Montageschlitz 42 in die Klammer 20 gefügt werden kann. Nach dem Einfädeln wird das Passteil 30 durch eine Drehbewegung von ca. 90° um die Drehachse 52 im ringförmigen Aufnahmesitz 44 der Klammer 20 verriegelt (Fig. 7). Der Aufnahmesitz 44 kann in der verriegelten Stellung des Passteils 20 geringfügig kleiner sein als der Durchmesser 48 des Passteils 20, sodass sich bei der Drehbewegung mit geringen Drehkräften eine gezielte Vorspannung erreichen lässt, die eine spielfreie Verbindung gewährleistet.

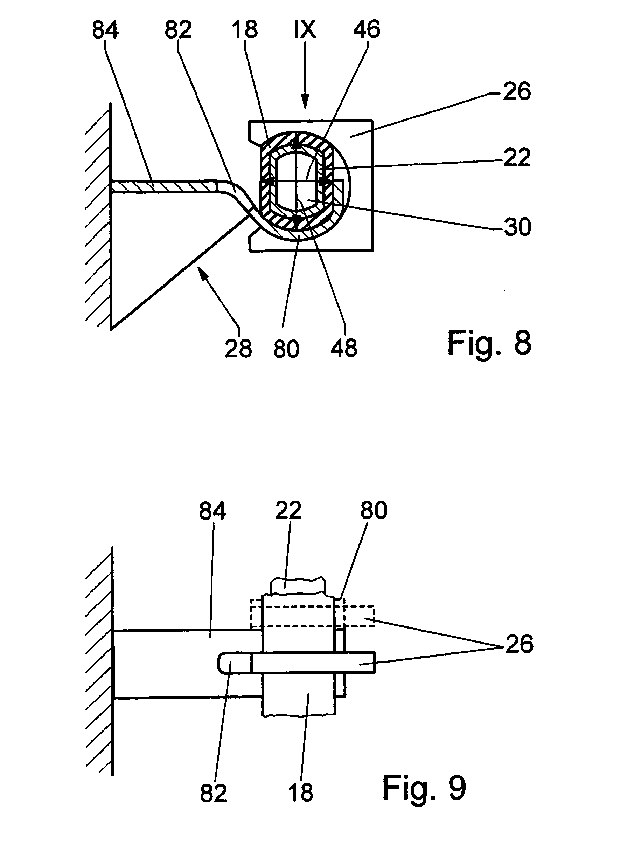

Auch lose Klammern 26 wie bei der Ausführung nach Fig. 5 können nach diesem Prinzip montiert werden (Fig. 8). Das Entkopplungselement 18 umgibt nach dieser Variante das Passteil 30, was beim Festlegen des Abstandes 46 zu berücksichtigen ist. Zum Befestigen wird die Klammer 26 mit ihrem Montageschlitz 42 von einer Schmalseite über das Passteil 22 und die Halbschale 80 geschoben. Dabei kann ein Schenkel der Klammer 26 durch eine Öffnung 82 in der Auflage 28 geführt werden. Es ist auch möglich, dass die Halbschale 80 über einen Befestigungsteil 84 in Längsrichtung des Passteils 22 verlängert ist, sodass die Klammer 26 seitlich des Befestigungsteils 84, wie in Fig. 9 gestrichelt dargestellt, frei drehbar montiert werden kann.

Die Schnappelemente in Form einer Klammer 20 können an den verschiedenen Befestigungsstellen im Bereich der Wischerlager 16 und der Motorplatine 12 miteinander und ggf. mit Schraubverbindungen je nach der aktuellen Einbausituation kombiniert werden.

## Patentansprüche

1. Befestigungsanordnung einer Scheibenwischeranlage, die mittels einer Platine (10) an mehreren Stellen einer Fahrzeugkarosserie befestigt ist, wobei die Platine (10) durch mindestens eine als Schnappelement (20, 26) ausgebildete Klammer aus einem elastisch nachgiebigen Werkstoff mit einem ringförmigen Aufnahmesitz (44) befestigt ist, der über einen Teil seines Umfangs, der kleiner als 180° ist, so weit offen ist, dass ein dem Aufnahmesitz (44) entsprechendes Passteil (22) durch die Öffnung am Umfang des Aufnahmesitzes (44) in diesen gedrückt werden kann und von der Klammer (20, 26) gehalten wird, **dadurch gekennzeichnet, dass** die Platine (10) eine Rohrplatine ist und das Passteil (22) von einem Stück eines Platinenrohrs (14) der Platine (10) gebildet wird.

2. Befestigungsanordnung nach Anspruch 1, **dadurch gekennzeichnet, dass** das Passteil (22) zwischen den Wischerlagern (16) angeordnet ist.

3. Befestigungsanordnung nach Anspruch 1 oder 2, **dadurch gekennzeichnet, dass** die Klammer (20) am äußeren Umfang unmittelbar mit der Fahrzeugkarosserie fest verbunden ist.

4. Befestigungsanordnung nach Anspruch 3, **dadurch gekennzeichnet, dass** die Klammer (20) aus einem Teil eines Karosserieblechs besteht und an der Fahrzeugkarosserie angeformt ist.

5. Befestigungsanordnung nach Anspruch 3, **dadurch gekennzeichnet, dass** die Klammer (20) an die Fahrzeugkarosserie geschweißt oder genietet ist.

6. Befestigungsanordnung nach Anspruch 1 oder 2, **dadurch gekennzeichnet, dass** an der Fahrzeugkarosserie eine Auflage (28) ortsfest angebracht ist, welche an ihrem freien Ende die Form einer Halbschale (54) aufweist, in der das entsprechende Passteil (22) der Platine (10) eingelegt ist, wobei die Klammer (26) das Passteil (22) und die Halbschale (54) umgreift.

7. Befestigungsanordnung nach einem der vorhergehenden Ansprüche, **dadurch gekennzeichnet, dass** der Aufnahmesitz (44) und das Passteil (22) eine von einer Kreisform abweichende Querschnittkontur hat.

8. Befestigungsanordnung nach Anspruch 7, **dadurch gekennzeichnet, dass** der ringförmige Querschnitt des Passteils (22) zwei einander gegenüberliegende Abflachungen (50) mit einem Abstand (46) aufweist, wobei dieser kleiner ist als die Weite des Montageschlitzes (42) der Klammer (20, 26).

## Claims

1. Fastening arrangement of a windscreen wiper device which is fastened to a plurality of points on a vehicle body by means of a mounting plate (10), the mounting plate (10) being fastened by means of at least one clip, which is designed as a snap-type element (20, 26) and is made from an elastically flexible material, to an annular receiving seat (44) which is open over a part of its circumference which is smaller than 180° to such an extent that a fitting part (22) corresponding to the receiving seat (44) can be pressed into the latter through the opening on the circumference of the receiving seat (44) and is held by the clip (20, 26), **characterized in that** the mounting plate (10) is a tubular mounting plate and the fitting part (22) is formed by a piece of a mounting plate tube (14) of the mounting plate (10).

2. Fastening arrangement according to Claim 1, **characterized in that** the fitting part (22) is arranged between the wiper bearings (16).

3. Fastening arrangement according to Claim 1 or 2, **characterized in that** the clip (20) is fixedly connected on the outer circumference directly to the vehicle body.

4. Fastening arrangement according to Claim 3, **characterized in that** the clip (20) is composed of a part of a vehicle body sheet and is integrally formed on the vehicle body.

5. Fastening arrangement according to Claim 3, **characterized in that** the clip (20) is welded or riveted to the vehicle body.

6. Fastening arrangement according to Claim 1 or 2, **characterized in that** a support (28) is fitted in a fixed position to the vehicle body and, at its free end, is in the form of a half shell (54) in which the corresponding fitting part (22) of the mounting plate is placed, with the clip (26) engaging around the fitting part (22) and the half shell (54).

7. Fastening arrangement according to one of the preceding claims, **characterized in that** the receiving seat (44) and the fitting part (22) have a cross-sectional contour differing from a circular shape.

8. Fastening arrangement according to Claim 7, **characterized in that** the annular cross section of the fitting part (22) has two mutually opposite flattened portions (50) at a distance (46), the latter being smaller than the width of the installation slot (42) of the clips (20, 26).

## Revendications

1. Dispositif de fixation d'une installation d'essuie-glace, relié à l'aide d'une platine (10) à plusieurs endroits d'une carrosserie de véhicule,
la platine (10) étant fixée par au moins une pince en forme d'élément d'enclipsage (20, 26) en une matière élastique souple dans un logement annulaire (44) ouvert sur une partie de sa périphérie, inférieure à 180°, suffisamment pour pouvoir enfoncer une pièce d'assemblage (22) correspondant au logement (44) à travers l'ouverture à la périphérie du logement (44) et être tenu par la pince (20, 26),
**caractérisé en ce que**
la platine est une platine tubulaire et la pièce d'assemblage (22) est constituée par un morceau de tube (14) de la platine (10).

2. Dispositif de fixation selon la revendication 1,
**caractérisé en ce que**
la pièce d'assemblage (22) est prévue entre les paliers d'essuie-glace (16).

3. Dispositif de fixation selon la revendication 1 ou 2,
**caractérisé en ce que**
la pince (20) est reliée solidairement à la périphérie extérieure, directement à la carrosserie du véhicule.

4. Dispositif de fixation selon la revendication 3,
**caractérisé en ce que**
la pince (20) formée par une partie d'une tôle de carrosserie est mise en forme sur la carrosserie du véhicule.

5. Dispositif de fixation selon la revendication 3,
**caractérisé en ce que**
la pince (20) est soudée ou rivetée à la carrosserie du véhicule.

6. Dispositif de fixation selon la revendication 1 ou 2,
**caractérisé par**
un appui (28) installé de manière fixe à la carrosserie du véhicule, cet appui ayant à son extrémité libre la forme d'une demi-coquille (54) recevant la partie ajustée correspondante (22) de la platine (10), la pince (26) entourant la pièce d'assemblage (22) et la demi-coquille (54).

7. Dispositif de fixation selon l'une des revendications précédentes,
**caractérisé en ce que**
le siège et la pièce d'assemblage (22) ont un contour de section différent d'une forme circulaire.

8. Dispositif de fixation selon la revendication 7,
**caractérisé en ce que**
la section annulaire de la pièce d'assemblage (22) comporte deux à-plats (50) opposés et séparés d'une distance (46) plus petite que la largeur de la fente de montage (42) des pinces (20, 26).
